# FASCICULE DE BREVET EUROPEEN

(11) **EP 1 420 976 B1**
(45) Date de publication et mention de la délivrance du brevet: **11.06.2008**
(21) Numéro de dépôt: 02759941.4
(22) Date de dépôt: 01.08.2002
(51) Int. Cl.: B60L 9/30

(54) **ALIMENTATION ELECTRIQUE A TENSIONS MULTIPLES POUR VEHICULE FERROVIAIRE**
ELEKTRISCHE MEHRSPANNUNGSVERSORGUNG FÜR EIN SCHIENENFAHRZEUG
MULTIPLE-VOLTAGE POWER SUPPLY FOR RAILWAY VEHICLE

(30) Priorité: 31.08.2001 EP 01870188
(43) Date de publication de la demande: 26.05.2004
(73) Titulaire: ALSTOM BELGIUM S.A., 6001 Charleroi (BE)
(72) Inventeur: COLASSE, Alexis, B-5100 JAMBES (BE); DELECLUSE, Christophe, B-7500 TOURNAI (BE); MAFFEI, Raphael, B-7141 CARNIERES (BE)
(74) Mandataire: Blot, Philippe Robert Emile
(86) Numéro de dépôt international: PCT/BE2002/000133
(87) Numéro de publication internationale: WO 2003/018346

(56) Documents cités:
- EP-A- 1 022 181
- DE-A- 19 843 110
- JONES N C ET AL: "BB10003 -PROTOTYPE ELECTRIC LOCOMOTIVE FOR THE TMST" PROCEEDINGS OF THE IEEE/ASME JOINT RAILROAD CONFERENCE. ST. LOUIS, MAY 21 - 23, 1991, NEW YORK, IEEE, US, 21 mai 1991 (1991-05-21), pages 125-132, XP000289161 ISBN: 0-7803-0072-6

## Description

### Objet de l'invention

La présente invention se rapporte à un procédé pour l'alimentation d'une chaîne de propulsion d'un véhicule ferroviaire, typiquement une locomotive.

La présente invention se rapporte plus particulièrement à un procédé d'alimentation lié à une reconfiguration du schéma électrique sous différentes tensions de service à la caténaire.

L'invention concerne également le dispositif pour la mise en oeuvre dudit procédé.

### Arrière-plan technologique et état de la technique

Le domaine d'application de la présente invention se rapporte à la commande en vitesse variable de machines synchrones ou asynchrones à partir de plusieurs tensions de service, continues ou alternatives, présentes à la caténaire.

Les chaînes de propulsion sont de ce fait constituées d'un certain nombre d'éléments destinés à convertir la tension de la caténaire en vue de fournir une tension pour la commande dudit moteur.

Ces chaînes de propulsions sont constituées d'au moins un convertisseur, onduleur ou redresseur destiné à convertir la tension présente à la caténaire en une tension triphasée la plus proche possible d'un système triphasé sinusoïdal équilibré variable en fréquence et en amplitude en vue de commander le moteur synchrone ou asynchrone. Dans certains cas, elles comprennent également un hacheur de freinage, éventuellement associé à un écrêteur, et divers filtres.

Des exemples de chaînes de propulsion sont repris ci dessous pour des exemples spécifiques de tension présente à la caténaire.

### En 25 kV-50 Hz alternatif

- un transformateur de puissance;
- un redresseur commandé, typiquement un PMCF (Pont Monophasé à Commutation Forcée);
- un onduleur d'alimentation des moteurs de propulsion;
- un hacheur de freinage rhéostatique (la récupération n'étant pas toujours possible).

### En 15 kV-16 Hz 2/3 alternatif

- un transformateur de puissance (le même qu'en 25 kV-50 Hz);
- un redresseur commandé (idem);
- un onduleur d'alimentation des moteurs de propulsion;
- le hacheur de freinage n'est pas indispensable sous cette tension.

### En 3 kV continu

- un filtre d'entrée;
- un onduleur d'alimentation des moteurs de propulsion;
- un hacheur de freinage (nécessaire car la récupération n'est possible que s'il y a un autre utilisateur sur la ligne); ce hacheur de freinage réalise également la fonction d'écrêteur de tension (qui limite la tension sur les semi-conducteurs).

### En 1500 V continu

- un filtre d'entrée;
- un onduleur d'alimentation des moteurs de propulsion;
- un hacheur de freinage (nécessaire car la récupération n'est possible que s'il y a un autre utilisateur sur la ligne); ce hacheur de freinage réalise également la fonction d'écrêteur de tension (qui limite la tension sur les semi-conducteurs).

Sous certains réseaux, comme typiquement celui de la SNCF, il est nécessaire de s'assurer qu'aucun courant n'est renvoyé à la caténaire. L'ensemble du freinage se fait alors en dissipant l'énergie dans les résistances de freinage.

Cet inventaire de fonctions peut également être étendu à d'autres tensions continues ou alternatives.

En plus de ces fonctions liées à la chaîne de propulsion elle-même, il faut ajouter une fonction convertisseur auxiliaire (CVS) permettant d'alimenter les auxiliaires de la propulsion tels que ventilateurs, compresseurs, etc.

Lé problème se complique du fait que les pays n'implémentent pas tous la même alimentation. En particulier, lorsque les locomotives effectuent des trajets impliquant le passage d'une frontière d'un pays vers un autre, il est indispensable que le moteur synchrone ou asynchrone soit à même d'être alimenté sous différentes tensions de service présentes à la caténaire.

La plupart des éléments présents décrits ci-dessus dans les chaînes de propulsion sont constitués d'interrupteurs utilisant des composants de, puissance tels que des thyristors ou des GTO (utilisés jusqu'il y a peu).

Dans le cas particulier des GTO, qui sont des semi-conducteurs qui présentent une tenue en tension de 4,5 kV; ceux-ci sont obligatoirement munis de circuits de protection de type "snubber", c'est-à-dire de circuits d'aide à la commutation.

Ces semi-conducteurs présentaient les avantages suivants :
- pas de nécessité d'un dispositif écrêteur, vu que la tension de tenue est alors suffisante pour une tension nominale de 3 kV;
- possibilité d'ouvrir le circuit pour y placer un contacteur, même entre le condensateur d'entrée et le convertisseur, dans la boucle de commutation, grâce au snubber, la self parasite du circuit de commutation n'ayant pas d'importance.

De plus, vu la tension de tenue maximum de 4,5 kV des GTO, il n'est pas envisageable de tenir la tension continue caténaire de 3 kV avec uniquement un composant. Vu la difficulté à placer deux interrupteurs de ce type directement en série, il est souvent préférable de passer par un dispositif d'entrée qui abaisse la tension (avec une mise en série indirecte des GTO) et de placer ensuite un onduleur sous une tension plus faible.

Depuis quelque temps sont apparus de nouveaux types de semi-conducteurs statiques qui peuvent être définis sous le vocable "IGBT" (Insulated Gate Bipolar Transistor).

Jusqu'il y a peu, ces semi-conducteurs de type IGBT présentaient une tenue en tension de maximum 3,3 kV. Les derniers progrès ont permis l'apparition de semi-conducteurs pouvant atteindre des tensions de l'ordre de 6,5 kV. Ceci signifie qu'il est dès lors possible de placer un seul semi-conducteur en vue de tenir directement la tension réseau continue nominale de 3 kV.

Les semi-conducteurs du type IGBT par exemple ne nécessitent plus de snubber. Dès lors, la self parasite entre le condensateur et le convertisseur doit être minimisée et il n'est plus possible de placer un contacteur dans cette boucle de commutation.

Cette situation oblige donc le concepteur à repenser le schéma électrique, vu l'apparition de ce problème lié à la nouvelle génération de semi-conducteurs, mais en même temps offre des possibilités de simplification importante de celui-ci et offre potentiellement des solutions nouvelles pour les schémas relatifs aux chaînes de propulsion des véhicules ferroviaires multi-tensions.

Enfin, on a observé que les gestionnaires de réseaux continus alternatifs imposent des gabarits maximum pour le rejet d'harmoniques de courant à la caténaire, et ceci afin de ne pas perturber les circuits de voie qui sont utilisés pour assurer la signalisation. Ces gabarits sont propres à chaque réseau en fonction des circuits de voie employés. Certains réseaux, comme le 3 kV du réseau ferroviaire italien, imposent des rejets de courant très faibles même pour les basses et très basses fréquences, qui sont en fait les fréquences de résonance du filtre d'entrée (self + condensateur). Dès lors, la moindre excitation (blocage de l'onduleur, saut de tension de la caténaire,...) de ce filtre d'entrée occasionne des dépassements de ces gabarits.
Des procédés selon l'état de la technique sont connus des documents XP 000289161 et DE-A-19843110.

### Buts de l'invention

La présente invention vise à fournir une solution qui permette de s'affranchir des inconvénients de l'état de la technique.

Plus particulièrement, l'invention a pour but de fournir une reconfiguration du schéma électrique, sous les différentes tensions de service, en limitant au maximum le nombre de composants électriques élémentaires nécessaires au fonctionnement d'une chaîne de propulsion ferroviaire, en vue d'en optimiser le nombre.

La présente invention a pour but premier de proposer une solution qui évite un retour du courant vers la caténaire.

A titre complémentaire, la présente invention vise à résoudre le problème du dépassement de gabarits, y compris pour les fréquences très basses.

L'invention vise comme but second la réutilisation de composants du schéma électrique existants pour l'alimentation d'au moins un convertisseur auxiliaire.

L'invention a pour but additionnel d'annuler les pertes de commutation à l'allumage du semi-conducteur en vue de permettre l'augmentation de la fréquence et la diminution de la self de sortie pour l'alimentation du convertisseur auxiliaire.

La présente invention vise comme troisième but la récupération du condensateur de filtre 2f nécessaire sous la tension 15 kV-16 Hz 2/3 pour le fonctionnement sans filtre 2f sous 25 kV-50 Hz ou sous les tensions continues.

### Principaux éléments caractéristiques de l'invention

Un premier objet de la présente invention se rapporte à un procédé pour l'alimentation électrique multi-tensions alternative(s) et/ou continue(s) au départ d'une caténaire, destiné à fournir par l'intermédiaire d'au moins une chaîne de propulsion, la tension requise à un moteur électrique d'un véhicule ferroviaire, de préférence une locomotive, ladite chaîne de propulsion présentant un schéma électrique modulaire qui comprend une pluralité de bras de puissance élémentaires, chacun desdits bras comportant au moins une diode polarisée en inverse par rapport à la haute tension et un semi-conducteur, et qui est reconfigurable en fonction des différentes tensions de service, par optimisation du nombre desdits bras utilisés, ladite alimentation comprenant en outre séquentiellement dans le circuit électrique de puissance, entre un transformateur de puissance alimenté par la caténaire et le moteur électrique dudit véhicule, un pont redresseur commandé dont chaque bras comprend au moins une diode en sens inverse servant à redresser une tension alternative fournie par la caténaire via le transformateur en une tension continue, un filtre d'entrée essentiellement réactif, un hacheur de freinage pouvant avoir également une fonction d'écrêtage et un onduleur multiphasé, ces différents éléments comprenant des composants électroniques tels que des semi-conducteurs de puissance, ledit onduleur étant en branchement direct sur la caténaire pour les tensions de service continues, caractérisé en ce que l'on réutilise la diode du premier bras du pont redresseur commandé sous tension continue de la caténaire pour empêcher la récupération de l'énergie électrique par la caténaire, lors du mode de fonctionnement en freinage.

Si nécessaire, on réutilise le premier bras du pont redresseur commandé, sous tension continue basse, pour assurer une fonction de hacheur élévateur de tension permettant d'augmenter la puissance de ladite chaîne de propulsion sous cette tension continue basse.

Selon une forme d'exécution préférée, on peut récupérer les secondaires du transformateur de puissance en vue de réaliser la fonction de la self d'entrée du hacheur élévateur.

Avantageusement, on peut également assurer ainsi la récupération de l'énergie électrique par la caténaire, lors du mode de fonctionnement en freinage, en court-circuitant ladite diode par l'allumage du semi-conducteur monté en parallèle sur cette diode.

De plus, sous tension continue, ladite diode peut être destinée à réduire, lors d'un court-circuit éventuel sur une chaîne de propulsion, le courant de court-circuit alimenté par les condensateurs des autres chaînes de propulsion.

En outre, la présente invention vise à résoudre le problème des dépassements de gabarits en proposant un procédé dans lequel ladite diode empêche une oscillation du courant dans le filtre d'entrée sous les tensions continues, lors d'une excitation occasionnelle dudit filtre, ce qui réduit les courants harmoniques dudit filtre.

Un second objet de la présente invention se rapporte à un procédé pour l'alimentation électrique multi-tensions alternative (s) et/ou continue (s) au départ d'une caténaire, destiné à fournir par l'intermédiaire d'au moins une chaîne de propulsion, la tension requise à un moteur électrique d'un véhicule ferroviaire, de préférence une locomotive, ladite chaîne de propulsion présentant un schéma électrique modulaire qui comprend une pluralité de bras de puissance élémentaires, chacun desdits bras comportant au moins une diode polarisée en inverse par rapport à la haute tension et un semi-conducteur, et qui est reconfigurable en fonction des différentes tensions de service, par optimisation du nombre desdits bras utilisés, ladite alimentation comprenant en outre séquentiellement dans le circuit électrique de puissance, entre un transformateur de puissance alimenté par la caténaire et le moteur électrique dudit véhicule, un pont redresseur commandé dont chaque bras comprend au moins une diode en sens inverse servant à redresser une tension alternative fournie par la caténaire via le transformateur en une tension continue, un filtre d'entrée essentiellement réactif, un hacheur de freinage pouvant avoir également une fonction d'écrêtage et un onduleur multiphasé, ces différents éléments comprenant des composants électroniques tels que des semi-conducteurs de puissance, ledit onduleur étant en branchement direct sur la caténaire pour les tensions de service continues, caractérisé en ce que l'on réutilise le deuxième bras du pont redresseur commandé sous les tensions continues pour assurer une fonction de hacheur abaisseur de tension en vue de produire une tension plus faible permettant d'alimenter de préférence un convertisseur auxiliaire dudit véhicule.

Avantageusement, on commande le hacheur abaisseur constitué par ledit deuxième bras réutilisé du pont redresseur commandé, disposant d'un semi-conducteur supérieur et d'un semi-conducteur inférieur, de façon à obtenir une ondulation de courant très importante en vue d'inverser le courant de sortie sur la self de sortie. Dès lors, la commutation à l'allumage du semi-conducteur se fait à zéro courant et la commutation des diodes se fait de manière douce lors du passage par zéro de manière à annuler les pertes de commutation à l'allumage dudit semi-conducteur et à l'extinction de la diode correspondante. De ce fait, il est possible d'augmenter avantageursement la fréquence de commutation.

De préférence, le nombre de bras effectivement utilisé dépend de la tension sélectionnée, ledit nombre étant mis en oeuvre au moyen d'une pluralité de contacteurs dont la position ouverte ou fermée est fonction de ladite tension sélectionnée.

L'onduleur peut être triphasé, de préférence à deux niveaux de tension et comprendre trois bras.

Un troisième objet de la présente invention vise à proposer un procédé pour l'alimentation électrique multi-tensions alternative(s) et/ou continue(s) au départ d'une caténaire, destiné à fournir par l'intermédiaire d'au moins une chaîne de propulsion, la tension requise à un moteur électrique d'un véhicule ferroviaire, de préférence une locomotive, ladite chaîne de propulsion présentant un schéma électrique modulaire qui comprend une pluralité de bras de puissance élémentaires, chacun desdits bras comportant au moins une diode polarisée en inverse par rapport à la haute tension et un semi-conducteur, et qui est reconfigurable en fonction des différentes tensions de service, par optimisation du nombre desdits bras utilisé, ladite alimentation comprenant en outre séquentiellement dans le circuit électrique de puissance, entre un transformateur de puissance alimenté par la caténaire et le moteur électrique dudit véhicule, un pont redresseur commandé dont chaque bras comprend au moins une diode en sens inverse servant à redresser une tension alternative fournie par la caténaire via le transformateur en une tension continue, un filtre d'entrée essentiellement réactif, un hacheur de freinage pouvant avoir également une fonction d'écrêtage et un onduleur multiphasé, ces différents éléments comprenant des composants électroniques tels que des semi-conducteurs de puissance, ledit onduleur étant en branchement direct sur la caténaire pour les tensions de service continues, caractérisé en ce que le condensateur utilisé sous la tension alternative de fréquence la plus faible, de préférence sous 15 kVac/16 Hz 2/3, en combinaison avec une self série, pour filtrer les harmoniques à deux fois la fréquence fondamentale générées par le redresseur commandé, ledit filtre étant appelé "filtre 2f", ledit filtre 2f n'étant pas nécessaire sous les autres tensions alternatives ou continues, est réutilisé pour augmenter la valeur du condensateur de filtrage de la tension continue, sous les autres tensions de service.

De manière particulièrement avantageuse, les différents procédés selon la présente invention pourront être utilisés en combinaison pour des chaînes de propulsion multi-tensions sélectionnées dans le groupe comprenant au moins les tensions suivantes : 25 kVac/50 Hz, 15 kVac/16 Hz 2/3, 3 kVdc et 1,5 kVdc.

La présente invention se rapporte également à une installation destinée à la mise en oeuvre des différents procédés selon la présente invention. Cette installation constituant la chaîne de propulsion comprend au moins séquentiellement, dans le circuit électrique de puissance, entre un transformateur de puissance alimenté par une caténaire et un moteur électrique dudit véhicule, ladite caténaire pouvant fournir une pluralité de tensions réseau, alternatives ou continues, ledit circuit électrique comprenant une pluralité de contacteurs pour la sélection d'une tension caténaire donnée :
- un pont redresseur commandé, de préférence un pont monophasé à commutation forcée (PMCF);
- un filtre d'entrée essentiellement réactif, comprenant de préférence au moins une capacité et/ou au moins une self;
- un hacheur de freinage pouvant avoir également une fonction d'écrêtage;
- un onduleur multiphasé multi-niveaux, de préférence triphasé;
- les composants électroniques, de préférence des semi-conducteurs de puissance de type IGBT, de chaque élément appartenant à au moins un bras de puissance élémentaire du schéma électrique modulaire.

### Brève description des figures

La figure 1 représente le schéma électrique de puissance générale d'alimentation d'un véhicule ferroviaire, typiquement une locomotive, depuis la caténaire jusqu'aux chaînes de propulsion (n = 4). La chaîne de propulsion numéro 1, comprenant le moteur M, est représentée en détail.

La figure 2 représente une variante de la figure 1 selon une forme d'exécution préférée de la présente invention.

La figure 3 représente schématiquement le bras réversible du PMCF réalisant un hacheur abaisseur du convertisseur auxiliaire.

La figure 4 représente, en fonction du temps, le courant et la tension de sortie du bras réversible représenté à la figure 3 vers le convertisseur auxiliaire.

### Description d'une forme d'exécution préférée de l'invention

L'idée de base qui sous-tend l'invention est la suivante : étant donné que le schéma électrique du circuit de puissance de la chaîne de propulsion multi-tensions doit être reconfiguré spécifiquement pour chaque tension de service et étant donné que le circuit de puissance est modulaire et comporte un certain nombre de bras élémentaires, on réutilise, à chaque tension de service donnée, un ou plusieurs de ces bras pour assurer des fonctionnalités devant être idéalement remplies à ladite tension de service. Il faut noter que les bras réutilisés dans ce cadre sont par ailleurs soit excédentaires et inutiles ou encore possèdent déjà une fonction bien définie à ladite tension de service.

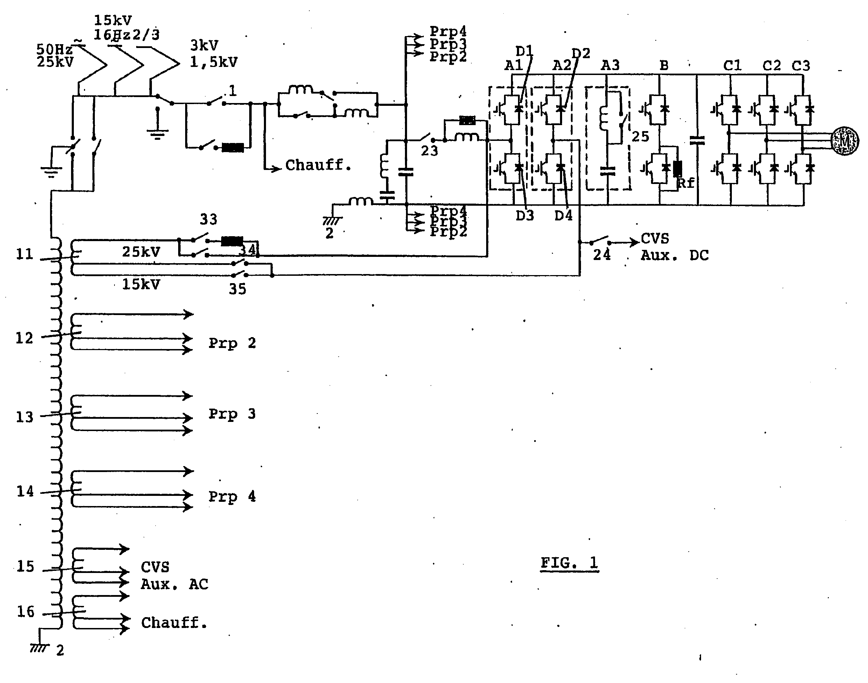

Le schéma reconfiguré présenté dans le cadre d'une forme d'exécution préférée de l'invention est donné à la figure 1.

La tension est prélevée à la caténaire 1 soit sous forme alternative (25 kV-50 Hz ou 15 kV-16 Hz 2/3), soit sous forme continue (3 kV ou 1,5 kV).

Un transformateur de puissance est alimenté en courant alternatif par la caténaire 1. Le transformateur comprend autant d'enroulements secondaires qu'il y a de chaînes de propulsion à alimenter (11,12,13,14) et éventuellement des enroulements secondaires auxiliaires (15,16), par exemple pour l'alimentation en alternatif d'un convertisseur secondaire (CVS) ou pour assurer le chauffage du train. Sur la figure 1, on a détaillé le schéma complet pour une chaîne de propulsion, les autres schémas identiques n'étant pas représentés (Prp2, Prp3, Prp4).

On propose une solution permettant de n'utiliser que les 6 bras strictement nécessaires pour le fonctionnement en 25 kV-50 Hz et de réutiliser ceux-ci dans les autres cas de tension. Dans ce schéma, l'onduleur triphasé alimentant chaque chaîne de propulsion M est en branchement direct sur la caténaire.

Les utilisations des bras sous les différentes tensions sont décrites ci-après :

### En 25 kV - 50 Hz alternatif

On utilise :
- un redresseur commandé PMCF : réalisé par 2 bras ou demi-ponts (A1,A2) ;
- un onduleur d'alimentation des moteurs de propulsion : réalisé par 3 bras (C1,C2,C3);
- un hacheur de freinage (B) : réalisé par un bras hacheur;
- un convertisseur auxiliaire AC (CVS) : branché sur un enroulement basse tension dédicacé 15 du transformateur principal.

Dans cette configuration, on ferme le contacteur 34 pour appliquer la tension alternative 50 Hz au pont redresseur commandé complet (A1, A2). La tension redressée est appliquée au hacheur de freinage (B) par l'intermédiaire du filtre d'entrée capacitif (A3, contacteur 25 fermé) et ensuite à l'onduleur (C1,C2,C3).

### En 15 kV - 16 Hz 2/3 alternatif

On utilise :
- un redresseur commandé (A1,A2) : réalisé par 2 bras ou demi-ponts;
- un onduleur d'alimentation des moteurs de propulsion : réalisé par 3 bras(C1,C2,C3);
- un CVS AC : branché sur un enroulement basse tension dédicacé 15 du transformateur principal.

Dans cette configuration, on ferme le contacteur 35 pour appliquer la tension alternative 16 Hz 2/3 au pont redresseur commandé complet (A1, A2). La tension alternative est appliquée par l'intermédiaire du filtre d'entrée réactif, c'est-à-dire selfique-capacitif (A3, une self L, contacteur 25 ouvert) et ensuite à l'onduleur (C1,C2,C3).

### En 3 kV continu

On utilise :
- un onduleur d'alimentation des moteurs de propulsion: réalisé par 3 bras (C1,C2,C3);
- un hacheur de freinage et écrêteur (B et/ou A1) : réalisé par un bras hacheur;
- un CVS DC : alimenté par un hacheur abaisseur constitué du deuxième bras PMCF (A2, contacteur 24 fermé sur CVS). Il s'agit d'un bras hacheur réversible.

### En 1500 V continu

On utilise :
- un onduleur d'alimentation des moteurs de propulsion: réalisé par 3 bras (C1,C2,C3);
- un hacheur de freinage et écrêteur (B) : réalisé par un bras hacheur;
- un hacheur élévateur peut être réalisé avec le premier bras du PMCF (A1);
- le CVS DC est alimenté par un hacheur abaisseur constitué du deuxième bras PMCF (A2, contacteur 24 fermé sur CVS). Il s'agit d'un bras hacheur réversible.

Le CVS n'a dès lors pas besoin d'étage 3 kV et comporte uniquement des composants alimentés par des tensions inférieures à 1000 V (composants industriels). En d'autres termes, on n'a pas besoin de dédoubler les étages haute tension sur les chaînes de propulsion et les convertisseurs auxiliaires.

Ces bras sont reconfigurés avec un minimum de contacteurs et aucun contacteur n'est placé dans la boucle composée du condensateur d'entrée de l'onduleur et des bras composés des semi-conducteurs, ce qui n'impose pas l'emploi de snubber.

Il est possible d'alimenter en tension caténaire la chaîne de propulsion 1 par le premier bras PMCF A1 (contacteur 23 fermé). Dans ce cas, la diode D1 du premier bras PMCF A1 permet d'assurer que le courant n'est pas renvoyé à la caténaire en freinage. Cette configuration permet également de continuer à alimenter le convertisseur auxiliaire par la caténaire en s'assurant qu'aucun courant n'est renvoyé à cette dernière. Au besoin, il est possible de reconfigurer ce bras en hacheur élévateur en commandant simplement le semi-conducteur IGBT en parallèle avec la diode. Si pour d'autres réseaux 1500 Vdc, le freinage en récupération est requis, il suffit alors de commander l'IGBT allumé.

La mise de la diode dans le circuit permet également de réduire les courants de court-circuit sous les réseaux continus. En effet, en cas de court-circuit sur la chaîne de propulsion 1, les condensateurs des autres chaînes de propulsion ne se déchargent plus dans le court-circuit.

L'emploi d'un bras réversible pour réaliser le hacheur abaisseur du convertisseur auxiliaire permet d'autoriser une ondulation de courant très importante et d'autoriser le courant de sortie de s'inverser dans la self de sortie.

Dès lors la commutation à l'allumage du semi-conducteur se fait à zéro courant et la commutation des diodes se fait de manière douce lors du passage par zéro.

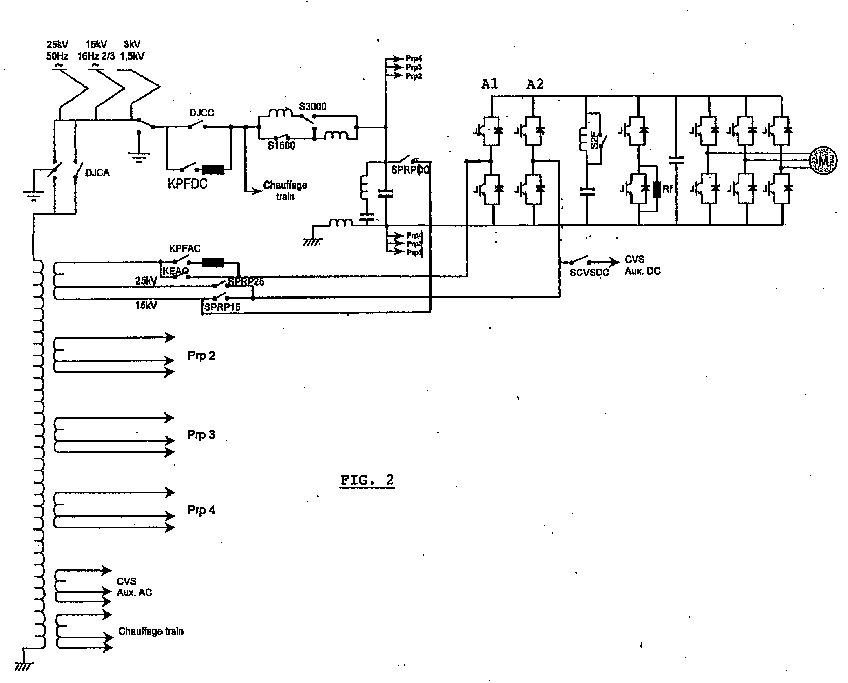

La figure 2 représente une forme d'exécution préférée où les selfs d'entrée ont été supprimées et ont été remplacées par les secondaires du transformateur de puissance. Dans ce cas, on observe qu'un lien direct entre l'entrée de l'onduleur et le secondaire apparaît.

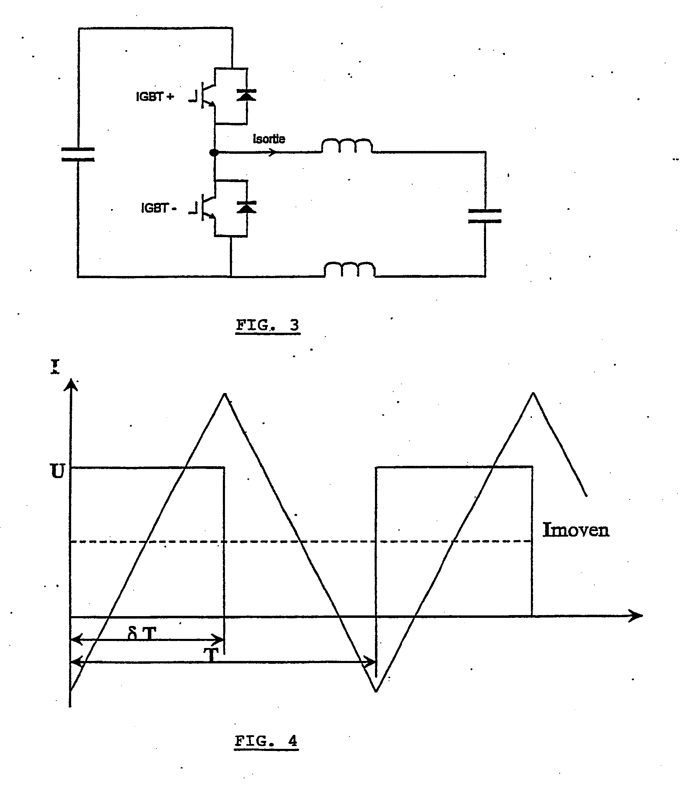

Le schéma et le mode de fonctionnement sont représentés aux figures 3 et 4 respectivement.

Enfin, il faut signaler la réutilisation avantageuse du condensateur utilisé sous la tension alternative de fréquence la plus faible, typiquement 15 kV-16 Hz 2/3, en combinaison avec une inductance en série ("filtre 2f", A3), en vue de filtrer les harmoniques à deux fois la fréquence fondamentale générées par le redresseur commandé sur la tension continue. Ce filtre n'est pas nécessaire sous les autres tensions alternatives (fréquence plus élevée) et continues. Le condensateur est alors réutilisé de manière à augmenter la valeur du condensateur de filtrage passe-bas sur la tension continue pour rendre acceptables le contenu harmonique des courants rejetés à la caténaire ou encore l'oscillation de tension sur le bus continu.

## Revendications

1. Procédé pour l'alimentation électrique multi-tensions alternative(s) et/ou continue(s) au départ d'une caténaire, destiné à fournir par l'intermédiaire d'au moins une chaîne de propulsion, la tension requise à un moteur électrique d'un véhicule ferroviaire, de préférence une locomotive, ladite chaîne de propulsion présentant un schéma électrique modulaire qui comprend une pluralité de bras de puissance élémentaires, chacun desdits bras comportant au moins une diode polarisée en inverse par rapport à la haute tension et un semi-conducteur, et qui est reconfigurable en fonction des différentes tensions de service, par optimisation du nombre desdits bras utilisé, ladite alimentation comprenant en outre séquentiellement dans le circuit électrique de puissance, entre un transformateur de puissance alimenté par la caténaire et le moteur électrique dudit véhicule, un pont redresseur commandé (A1,A2) dont chaque bras comprend au moins une diode en sens inverse (D1,D2) servant à redresser une tension alternative fournie par la caténaire via le transformateur en une tension continue, un filtre d'entrée essentiellement réactif (A3), un hacheur de freinage pouvant avoir également une fonction d'écrêtage (B) et un onduleur multiphasé (C), ces différents éléments comprenant des composants électroniques tels que des semi-conducteurs de puissance, ledit onduleur (C) étant en branchement direct sur la caténaire pour les tensions de service continues, **caractérisé en ce que** l'on réutilise la diode (D1) du premier bras (A1) du pont redresseur commandé sous tension continue de la caténaire pour empêcher la récupération de l'énergie électrique par la caténaire, lors du mode de fonctionnement en freinage.

2. Procédé selon la revendication 1, **caractérisé en ce qu'**on réutilise le premier bras (A1) du pont redresseur commandé, sous tension continue basse, pour assurer une fonction de hacheur élévateur de tension permettant d'augmenter la puissance de ladite chaîne de propulsion sous cette tension continue basse.

3. Procédé selon la revendication 2, **caractérisé en ce qu'**on récupère les secondaires du transformateur de puissance en vue de réaliser la fonction de self d'entrée du hacheur élévateur.

4. Procédé selon la revendication 1, **caractérisé en ce que** l'on assure la récupération de l'énergie électrique par la caténaire, lors du mode de fonctionnement en freinage, en court-circuitant ladite diode (D1) par l'allumage du semi-conducteur monté en parallèle sur cette diode.

5. Procédé selon la revendication 1, **caractérisé en ce**, sous tension continue, ladite diode (D1) est destinée à réduire, lors d'un court-circuit éventuel sur une chaîne de propulsion, le courant de court-circuit alimenté par les condensateurs des autres chaînes de propulsion.

6. Procédé selon la revendication 1, **caractérisé en ce que** ladite diode (D1) empêche une oscillation du courant dans le filtre d'entrée sous les tensions continues lors d'une excitation occasionnelle dudit filtre, ce qui réduit les courants harmoniques dudit filtre.

7. Procédé pour l'alimentation électrique multi-tensions alternative(s) et/ou continue(s) au départ d'une caténaire, destiné à fournir par l'intermédiaire d'au moins une chaîne de propulsion, la tension requise à un moteur électrique d'un véhicule ferroviaire, de préférence une locomotive, ladite chaîne de propulsion présentant un schéma électrique modulaire qui comprend une pluralité de bras de puissance élémentaires, chacun desdits bras comportant au moins une diode polarisée en inverse par rapport à la haute tension et un semi-conducteur, et qui est reconfigurable en fonction des différentes tensions de service, par optimisation du nombre desdits bras utilisé, ladite alimentation comprenant en outre séquentiellement dans le circuit électrique de puissance, entre un transformateur de puissance alimenté par la caténaire et le moteur électrique dudit véhicule, un pont redresseur commandé (A1,A2) dont chaque bras comprend au moins une diode en sens inverse (D1,D2) servant à redresser une tension alternative fournie par la caténaire via le transformateur en une tension continue, un filtre d'entrée essentiellement réactif (A3), un hacheur de freinage pouvant avoir également une fonction d'écrêtage (B) et un onduleur multiphasé (C), ces différents éléments comprenant des composants électroniques tels que des semi-conducteurs de puissance, ledit onduleur (C) étant en branchement direct sur la caténaire pour les tensions de service continues, **caractérisé en ce que** l'on réutilise le deuxième bras (A2) du pont redresseur commandé sous les tensions continues pour assurer une fonction de hacheur abaisseur de tension en vue de produire une tension plus faible permettant d'alimenter de préférence un convertisseur auxiliaire dudit véhicule.

8. Procédé selon la revendication 7, **caractérisé en ce qu'**on commande le hacheur abaisseur constitué par ledit deuxième bras réutilisé du pont redresseur commandé (A2), disposant d'un semi-conducteur supérieur et d'un semi-conducteur inférieur, de façon à obtenir une ondulation de courant très importante en vue d'inverser le courant de sortie sur la self de sortie.

9. Procédé selon la revendication 7 ou 8, **caractérisé en ce que** le nombre de bras effectivement utilisés dépend de la tension sélectionnée, ledit nombre étant mis en oeuvre au moyen d'une pluralité de contacteurs dont la position ouverte ou fermée est fonction de ladite tension sélectionnée.

10. Procédé selon la revendication 7 ou 8, **caractérisé en ce que** l'onduleur (C) est triphasé, de préférence à deux niveaux de tension et comprend trois bras (C1,C2,C3).

11. Procédé pour l'alimentation électrique multi-tensions alternative(s) et/ou continue(s) au départ d'une caténaire, destiné à fournir par l'intermédiaire d'au moins une chaîne de propulsion, la tension requise à un moteur électrique d'un véhicule ferroviaire, de préférence une locomotive, ladite chaîne de propulsion présentant un schéma électrique modulaire qui comprend une pluralité de bras de puissance élémentaires, chacun desdits bras comportant au moins une diode polarisée en inverse par rapport à la haute tension et un semi-conducteur, et qui est reconfigurable en fonction des différentes tensions de service, par optimisation du nombre desdits bras utilisés, ladite alimentation comprenant en outre séquentiellement dans le circuit électrique de puissance, entre un transformateur de puissance alimenté par la caténaire et le moteur électrique dudit véhicule, un pont redresseur commandé (A1,A2) dont chaque bras comprend au moins une diode en sens inverse (D1,D2) servant à redresser une tension alternative fournie par la caténaire via le transformateur en une tension continue, un filtre d'entrée essentiellement réactif (A3), un hacheur de freinage pouvant avoir également une fonction d'écrêtage (B) et un onduleur multiphasé (C), ces différents éléments comprenant des composants électroniques tels que des semi-conducteurs de puissance, ledit onduleur (C) étant en branchement direct sur la caténaire pour les tensions de service continues, **caractérisé en ce que** le condensateur utilisé sous la tension alternative de fréquence la plus faible, de préférence sous 15 kVac/16 Hz 2/3, en combinaison avec une self série, pour filtrer les harmoniques à deux fois la fréquence fondamentale générées par le redresseur commandé, ledit filtre étant appelé "filtre 2f", ledit filtre 2f n'étant pas nécessaire sous les autres tensions alternatives ou continues, est réutilisé pour augmenter la valeur du condensateur de filtrage de la tension continue, sous les autres tensions de service.

12. Utilisation en combinaison d'au moins deux procédés selon l'une quelconque des revendications précédentes, pour des chaînes de propulsion multi-tensions sélectionnées dans le groupe comprenant au moins les tensions suivantes : 25 kVac/50 Hz, 15 kVac/16 Hz 2/3, 3 kVdc et 1,5 kVdc.

13. Installation destinée à la mise en oeuvre du procédé selon l'une quelconque des revendications 1 à 11 et constituant la chaîne de propulsion, **caractérisée en ce qu'**elle comprend , disposés en séquence, dans le circuit électrique de puissance, entre un transformateur de puissance alimenté par une caténaire et un moteur électrique dudit véhicule, ladite caténaire pouvant fournir une pluralité de tensions réseau, alternatives ou continues, ledit circuit électrique comprenant une pluralité de contacteurs pour la sélection d'une tension caténaire donnée, au moins les éléments suivants :
- un pont redresseur commandé (A1,A2), de préférence un pont monophasé à commutation forcée (PMCF);
- un filtre d'entrée essentiellement réactif (A3), comprenant de préférence au moins une capacité et/ou au moins une self;
- un hacheur de freinage pouvant avoir également une fonction d'écrêtage (B);
- un onduleur multiphasé multi-niveaux (C1,C2,C3), de préférence triphasé;
- des composants électroniques, de préférence des semi-conducteurs de puissance de type IGBT pour chaque élément chaque élément appartenant à au moins un bras de puissance élémentaire du schéma électrique modulaire.

## Claims

1. Process for the a.c. and/or d.c. multi-voltage electrical power supply to the start of a catenary, intended to provide, through the agency of at least one propulsion chain, the requisite voltage to an electric motor of a rail vehicle, preferably a locomotive, said propulsion chain exhibiting a modular electrical layout which includes a plurality of elementary power arms, each of said arms including at least one polarised diode, inverted in relation to the high voltage, and a semiconductor, and which is reconfigurable as a function of the various operating voltages by optimisation of the number of said arms being used, said power supply further including sequentially in the electrical power circuit, between a power transformer supplied with power by the catenary and the electric motor of said vehicle, a controlled rectifier bridge (A1, A2), each arm of which includes at least one diode in the reverse direction (D1, D2) serving to rectify an a.c. voltage provided by the catenary via the transformer into a d.c. voltage, an essentially reactive input filter (A3), a braking chopper capable of also having a limiting function (B), and a multi-phase inverter (C), these various elements including electronic components such as power semiconductors, said inverter (C) being a direct branch on the catenary for the d.c. operating voltages, **characterised in that** the diode (D1) of the first arm (A1) of the controlled rectifier bridge under d.c. voltage of the catenary is re-used, in order to prevent the regeneration of the electrical energy by the catenary during the operating mode in braking.

2. Process according to Claim 1, **characterised in that** the first arm (A1) of the controlled rectifier bridge is re-used under low d.c. voltage, in order to ensure a voltage-boosting chopper function enabling the power of said propulsion chain to be increased under this low d.c. voltage.

3. Process according to Claim 2, **characterised in that** the secondaries of the power transformer are regenerated with a view to realising the input-coil function of the boosting chopper.

4. Process according to Claim 1, **characterised in that** during the operating mode in braking the regeneration of the electrical energy by the catenary is ensured by short-circuiting said diode (D1) by activating the semiconductor connected in parallel to this diode.

5. Process according to Claim 1, **characterised in that** under d.c. voltage said diode (D1) is intended to reduce the short-circuit current supplied by the capacitors of the other propulsion chains during a possible short circuit in a propulsion chain.

6. Process according to Claim 1, **characterised in that** said diode (D1) prevents an oscillation of the current in the input filter under the d.c. voltages during an occasional excitation of said filter, reducing the harmonic currents of said filter.

7. Process for the a.c. and/or d.c. multi-voltage electrical power supply to the start of a catenary, intended to provide, through the agency of at least one propulsion chain, the requisite voltage to an electric motor of a rail vehicle, preferably a locomotive, said propulsion chain exhibiting a modular electrical layout which includes a plurality of elementary power arms, each of said arms including at least one polarised diode, inverted in relation to the high voltage, and a semiconductor, and which is reconfigurable as a function of the various operating voltages by optimisation of the number of said arms being used, said power supply further including sequentially in the electrical power circuit, between a power transformer supplied with power by the catenary and the electric motor of said vehicle, a controlled rectifier bridge (A1, A2), each arm of which includes at least one diode in the reverse direction (D1, D2) serving to rectify an a.c. voltage provided by the catenary via the transformer into a d.c. voltage, an essentially reactive input filter (A3), a braking chopper capable of also having a limiting function (B), and a multi-phase inverter (C), these various elements including electronic components such as power semiconductors, said inverter (C) being a direct branch on the catenary for the d.c. operating voltages, **characterised in that** the second arm (A2) of the controlled rectifier bridge is re-used under the d.c. voltages, in order to ensure a voltage-lowering chopper function with a view to producing a lower voltage enabling preferably an auxiliary converter of said vehicle to be supplied with power.

8. Process according to Claim 7, **characterised in that** the lowering chopper constituted by said re-used second arm of the controlled rectifier bridge (A2), being provided with an upper semiconductor and a lower semiconductor, is controlled in such a manner as to obtain a very significant current ripple with a view to inverting the output current in the output coil.

9. Process according to Claim 7 or 8, **characterised in that** the number of arms effectively being used depends on the selected voltage, said number being put into effect by means of a plurality of contactors, the open or closed position of which is a function of said selected voltage.

10. Process according to Claim 7 or 8, **characterised in that** the inverter (C) is three-phase, preferably with two voltage levels, and includes three arms (C1, C2, C3).

11. Process for the a.c. and/or d.c. multi-voltage electrical power supply to the start of a catenary, intended to provide, through the agency of at least one propulsion chain, the requisite voltage to an electric motor of a rail vehicle, preferably a locomotive, said propulsion chain exhibiting a modular electrical layout which includes a plurality of elementary power arms, each of said arms including at least one polarised diode, inverted in relation to the high voltage, and a semiconductor, and which is reconfigurable as a function of the various operating voltages by optimisation of the number of said arms being used, said power supply further including sequentially in the electrical power circuit, between a power transformer supplied with power by the catenary and the electric motor of said vehicle, a controlled rectifier bridge (A1, A2), each arm of which includes at least one diode in the reverse direction (D1, D2) serving to rectify an a.c. voltage provided by the catenary via the transformer into a d.c. voltage, an essentially reactive input filter (A3), a braking chopper capable of also having a limiting function (B), and a multi-phase inverter (C), these various elements including electronic components such as power semiconductors, said inverter (C) being a direct branch on the catenary for the d.c. operating voltages, **characterised in that** the capacitor being used under the a.c. voltage of lowest frequency, preferably below 15 kVac/16 Hz 2/3, in combination with a series self-induction coil, in order to filter the harmonics at twice the fundamental frequency generated by the controlled rectifier, said filter being called 'filter 2f', said filter 2f not being necessary under the other a.c. or d.c. voltages, is re-used, in order to increase the value of the capacitor for filtering the d.c. voltage under the other operating voltages.

12. Use in combination of at least two processes according to any one of the preceding claims for multi-voltage propulsion chains selected from the group comprising at least the following voltages: 25 kVac/50 Hz, 15 kVac/16 Hz 2/3, 3 kVdc and 1.5 kVdc.

13. Installation intended for implementation of the process according to any one of Claims 1 to 11 and constituting the propulsion chain, **characterised in that** it comprises, arranged in sequence in the electrical power circuit between a power transformer supplied with power by a catenary and an electric motor of said vehicle, said catenary being capable of providing a plurality of a.c. or d.c. mains voltages, said electrical circuit including a plurality of contactors for the selection of a given catenary voltage, at least the following elements:
- a controlled rectifier bridge (A1, A2), preferably a monophase bridge with forced commutation;
- an essentially reactive input filter (A3), preferably including at least one capacitor and/or at least one self-induction coil;
- a braking chopper capable of also having a limiting function (B);
- a multi-level, multi-phase, preferably three-phase, inverter (C1, C2, C3);
- electronic components, preferably power semiconductors of IGBT type for each element pertaining to at least one elementary power arm of the modular electrical layout.

## Patentansprüche

1. Verfahren für die elektrische Mehrspannungsversorgung mit Wechselspannung(en) und/oder Gleichspannung(en) abgehend von einer Fahrleitung, welches zum Bereitstellen der von einem Elektromotor eines Schienenfahrzeugs, vorzugsweise einer Lokomotive benötigten Spannung mittels mindestens eines Antriebsstrangs bestimmt ist, wobei der Antriebsstrang ein modulares Schaltschema darstellt, das eine Mehrzahl von elementaren Leistungszweigen aufweist, wobei jeder der zweige mindestens eine entgegengesetzt zur Hochspannung gepolte Diode und einen Halbleiter aufweist, und das in Abhängigkeit von den unterschiedlichen Betriebsspannungen durch Optimierung der verwendeten Zweiganzahl rekonfigurierbar ist, wobei die versorgung ferner sequentiell in dem Leistungs-Stromkreis zwischen einem Leistungstransformator, der von der Fahrleitung gespeist wird, und dem Elektromotor des Fahrzeugs eine gesteuerte Gleichrichterbrücke (A1, A2) aufweist, von welcher jeder Zweig aufweist: mindestens eine entgegengerichtete Diode (D1, D2), die zum Gleichrichten einer von der Fahrleitung bereitgestellten Wechselspannung über den Transformator in eine Gleichspannung dient, ein im Wesentlichen reaktives Eingangsfilter (A3), einen Brems-zerhacker, der auch eine Spitzenbegrenzungs-Funktion (B) haben kann, und einen mehrphasigen Wechselrichter (C), wobei die verschiedenen Elemente elektronische Bauteile, wie zum Beispiel LeistungsHalbleiter aufweisen, wobei der Wechselrichter (C) für die Betriebs-Gleichspannungen direkt an der Fahrleitung angeschlossen ist, **dadurch gekennzeichnet, dass** die Diode (D1) des ersten Zweiges (A1) der gesteuerten Gleichrichterbrücke unter Gleichspannung der Fahrleitung wieder verwendet wird, um die Wiedergewinnung der elektrischen Energie durch die Fahrleitung während des Brems-Funktionsmodus zu verhindern.

2. Verfahren gemäß Anspruch 1, **dadurch gekennzeichnet, dass** der erste Zweig (A1) der gesteuerten Gleichrichterbrücke unter niedriger Gleichspannung wieder verwendet wird, damit eine spannungserhöhende Zerhackerfunktion sichergestellt wird, die es erlaubt, die Leistung des Antriebsstrangs unter dieser niedrigen Gleichspannung zu erhöhen.

3. Verfahren gemäß Anspruch 2, **dadurch gekennzeichnet, dass** die Sekundärseiten des Leistungstransformators im Hinblick auf das Realisieren der Eingangsdrossel-Funktion des spannungserhöhenden Zerhackers wiederverwertet werden.

4. Verfahren gemäß Anspruch 1, **dadurch gekennzeichnet, dass** die Wiedergewinnung der elektrischen Energie durch die Fahrleitung während des Brems-Funktionsmodus durch Kurzschließen der Diode (D1) durch Zünden des zu dieser Diode parallel geschalteten Halbleiters sichergestellt wird.

5. Verfahren gemäß Anspruch 1, **dadurch gekennzeichnet, dass** unter Gleichspannung die Diode (D1) während eines möglichen Kurzschlusses auf einem Antriebsstrang zum Verringern des Kurzschluss-Stroms, der durch die Kondensatoren der anderen Antriebsstränge eingespeist wird, bestimmt ist.

6. verfahren gemäß Anspruch 1, **dadurch gekennzeichnet, dass** die Diode (D1) eine Schwankung des Stroms im Eingangsfilter unter den Gleichspannungen während einer Zufallserregung des Filters verhindert, wodurch die Oberschwingungsströme des Filters verringert werden.

7. Verfahren für die elektrische Mehrspannungsversorgung mit Wechselspannung (en) und/oder Gleichspannung(en) abgehend von einer Fahrleitung, welches zum Bereitstellen der von einem Elektromotor eines Schienenfahrzeugs, vorzugsweise einer Lokomotive benötigten Spannung mittels mindestens eines Antriebsstrangs bestimmt ist, wobei der Antriebsstrang ein modulares Schaltschema darstellt, das eine Mehrzahl von elementaren Leistungszweigen aufweist, wobei jeder der Zweige mindestens eine entgegengesetzt zur Hochspannung gepolte Diode und einen Halbleiter aufweist, und das in Abhängigkeit von den unterschiedlichen Betriebsspannungen durch Optimierung der verwendeten Zweiganzahl rekonfigurierbar ist, wobei die Versorgung ferner sequentiell in dem Leistungs-Stromkreis zwischen einem Leistungstransformator, der von der Fahrleitung gespeist wird, und dem Elektromotor des Fahrzeugs eine gesteuerte Gleichrichterbrücke (A1, A2) aufweist, von welcher jeder Zweig aufweist: mindestens eine entgegengerichtete Diode (D1, D2), die zum Gleichrichten einer von der Fahrleitung bereitgestellten Wechselspannung über den Transformator in eine Gleichspannung dient, ein im Wesentlichen reaktives Eingangsfilter (A3), einen Brems-Zerhacker, der auch eine Spitzenbegrenzungs-Funktion (B) haben kann, und einen mehrphasigen Wechselrichter (C), wobei die verschiedenen Elemente elektronische Bauteile, wie zum Beispiel LeistungsHalbleiter aufweisen, wobei der Wechselrichter (C) für die Betriebs-Gleichspannungen direkt an der Fahrleitung angeschlossen ist, **dadurch gekennzeichnet, dass** der zweite Zweig (A2) der gesteuerten Gleichrichterbrücke unter den Gleichspannungen wiederverwendet wird, um im Hinblick auf das Erzeugen einer schwächeren Spannung eine spannungssenkende Funktion sicherzustellen, wodurch vorzugsweise erlaubt wird, einen Hilfswandler des Fahrzeugs zu speisen.

8. Verfahren gemäß Anspruch 7, **dadurch gekennzeichnet, dass** der Senkungs-Zerhacker, der durch den zweiten wiederverwendeten Zweig der gesteuerten Gleichrichterbrücke (A2), der einen oberen Halbleiter und einen unteren Halbleiter aufweist, gebildet ist, derart gesteuert wird, dass im Hinblick auf ein Invertieren des Ausgangsstroms auf der Ausgangsdrossel eine sehr starke Stromwelligkeit erhalten wird.

9. Verfahren gemäß Anspruch 7 oder 8, **dadurch gekennzeichnet, dass** die Anzahl von effektiv genutzten Zweigen von der ausgewählten Spannung abhängt, wobei die Anzahl mittels einer Mehrzahl von Schützen implementiert wird, deren offene oder geschlossene Stellung von der gewählten Spannung abhängt.

10. Verfahren gemäß Anspruch 7 oder 8, **dadurch gekennzeichnet, dass** der Wechselrichter (C) dreiphasig ist, vorzugsweise mit zwei Spannungsstufen, und drei zweige (C1, C2, C3) aufweist.

11. Verfahren für die elektrische Mehrspannungsversorgung mit Wechselspannung(en) und/oder Gleichspannung(en) abgehend von einer Fahrleitung, welches zum Bereitstellen der von einem Elektromotor eines Schienenfahrzeugs, vorzugsweise einer Lokomotive benötigten Spannung mittels mindestens eines Antriebsstrangs bestimmt ist, wobei der Antriebsstrang ein modulares Schaltschema darstellt, das eine Mehrzahl von elementaren Leistungszweigen aufweist, wobei jeder der zweige mindestens eine entgegengesetzt zur Hochspannung gepolte Diode und einen Halbleiter aufweist, und das in Abhängigkeit von den unterschiedlichen Betriebsspannungen durch Optimierung der verwendeten Zweiganzahl rekonfigurierbar ist, wobei die Versorgung ferner sequentiell in dem Leistungs-Stromkreis zwischen einem Leistungstransformator, der von der Fahrleitung gespeist wird, und dem Elektromotor des Fahrzeugs eine gesteuerte Gleichrichterbrücke (A1, A2) aufweist, von welcher jeder Zweig aufweist: mindestens eine entgegengerichtete Diode (D1, D2), die zum Gleichrichten einer von der Fahrleitung bereitgestellten Wechselspannung über den Transformator in eine Gleichspannung dient, ein im Wesentlichen reaktives Eingangsfilter (A3), einen Brems-Zerhacker, der auch eine Spitzenbegrenzungs-Funktion (B) haben kann, und einen mehrphasigen Wechselrichter (C), wobei die verschiedenen Elemente elektronische Bauteile, wie zum Beispiel LeistungsHalbleiter aufweisen, wobei der Wechselrichter (C) für die Betriebs-Gleichspannungen direkt an der Fahrleitung angeschlossen ist, **dadurch gekennzeichnet, dass** der Kondensator, der unter der wechselspannung mit der schwächsten Frequenz, vorzugsweise unter 15 kVac/16 Hz 2/3 verwendet wird, in Kombination mit einer Drosselreihe, zum Filtern der Oberschwingungen mit zweifacher Grundfrequenz, die von dem gesteuerten Gleichrichter erzeugt werden, wobei das Filter als "Filter 2f" bezeichnet wird, wobei das Filter 2f unter den anderen Wechselspannungen oder Gleichspannungen nicht erforderlich ist, wieder verwendet wird, um den Wert des Kondensators zum Filtern der Gleichspannung unter den anderen Betriebsspannungen zu erhöhen.

12. Verwendung von mindestens zwei verfahren gemäß einem der vorhergehenden Ansprüche in Kombination für in der Gruppe ausgewählte Mehrspannungs-Antriebsstränge, die mindestens die folgenden Spannungen aufweist: 25 kVac/50 Hz, 15 kVac/16 Hz 2/3, 3 kVdc und 1,5 kVdc.

13. Einrichtung, die zum Durchführen des Verfahrens gemäß einem der Ansprüche 1 bis 11 bestimmt ist, und die den Antriebsstrang bildet, **dadurch gekennzeichnet, dass** sie in Serie angeordnet, in dem Leistungs-Stromkreis, zwischen einem Leistungstransformator, der von einer Fahrleitung gespeist wird und einem Elektromotor des Fahrzeugs, mindestens die folgenden Elemente aufweist, wobei die Fahrleitung eine Mehrzahl von Wechselspannungs- oder Gleichspannungs-Netzspannungen bereitstellen kann, wobei der Stromkreis eine Mehrzahl von Schützen für das Auswählen einer gegebenen Fahrleitungsspannung aufweist:
- eine gesteuerte Gleichrichterbrücke (A1, A2), vorzugsweise eine Einphasenbrücke mit Zwangskommutierung (PMCF, pont monophasé à commutation forcée);
- ein im Wesentlichen reaktives Eingangsfilter (A3), welches vorzugsweise mindestens eine Kapazität und/oder mindestens eine Drossel aufweist;
- einen Brems-Zerhacker, der auch eine Spitzenbegrenzungs-Funktion (B) aufweisen kann;
- einen mehrphasigen Mehrstufen-Wechselrichter (C1, C2, C3), der vorzugsweise dreiphasig ist,
- elektronische Bauteile, vorzugsweise LeistungsHalbleiter des IGBT-Typs für jedes Element, wobei jedes Element zu mindestens einem elementaren Leistungszweig des modularen Schaltschemas gehört.
